# EUROPÄISCHE PATENTSCHRIFT

(11) **EP 3 338 524 B1**
(45) Veröffentlichungstag und Bekanntmachung des Hinweises auf die Patenterteilung: **25.06.2025**
(21) Anmeldenummer: 17401124.7
(22) Anmeldetag: 07.12.2017
(51) Int. Cl.: A01C 7/10, A01B 79/00, A01C 21/00

(54) **LANDWIRTSCHAFTLICHE EINZELKORNSÄMASCHINE UND VERFAHREN**
AGRICULTURAL PRECISION SEED DRILL AND METHOD
SEMOIR MONOGRAINE AGRICOLE ET PROCÉDÉ

(30) Priorität: 22.12.2016 DE 102016125453
(43) Veröffentlichungstag der Anmeldung: 27.06.2018
(60) Teilanmeldung: 20204023.4
(73) Patentinhaber: Amazonen-Werke H. Dreyer SE & Co. KG, 49205 Hasbergen (DE)
(72) Erfinder: Warns, Felix, 27804 Berne (DE)

(56) Entgegenhaltungen:
- WO-A1-2013/049198
- DE-A1- 102014 102 486

## Beschreibung

Die Erfindung betrifft eine landwirtschaftliche Sämaschine gemäß dem Oberbegriff des Patentanspruches 1 sowie ein Verfahren zum Betrieben einer landwirtschaftlichen Sämaschine nach dem Patentanspruch 5.

Eine landwirtschaftliche Arbeitsmaschine ist in EP 2 918 157 A2 beschrieben. Die Arbeitsmaschine ist als Verteilmaschine ausgebildet und zur Verteilung von vorzugsweise Dünge- und/oder Pflanzenschutzmittel vorgesehen. Zu diesem Zweck weist die Arbeitsmaschine ein in seiner Arbeitsstellung quer zur Fahrtrichtung ausgerichtetes Gestänge auf. Geeignete Ausbringelemente zur Ausbringung des zu verteilenden Materials sind beabstandet zueinander an dem Gestänge angeordnet. Der Arbeitsmaschine ist ein Winkelsensor zugeordnet, welcher während des Ausbringvorgangs den Winkel zwischen dem Zugfahrzeug und der Arbeitsmaschine ermittelt. Auf Basis dieses Winkels wird die Winkelgeschwindigkeit des Gestänges während einer Kurvenfahrt bestimmt, anhand derer für einzelne Teilbreiten des Gestänges abschnittsweise eine Anpassung der tatsächlich ausgebrachten Materialmenge und/oder Ausbringrate erfolgen soll. Die Teilbreiten umfassen dabei typischerweise jeweils mehrere Ausbringelemente. Zudem offenbart die EP 2 918 157 A2, dass die beschriebene Anpassung prinzipiell auch auf als Sämaschine ausgebildete Verteilmaschinen übertragbar sei.

Bei einer Sämaschine, insbesondere einer Einzelkornsämaschine, ist allerdings die Unterteilung des Gestänges bzw. der Ausbringung in mehrere Ausbringelemente umfassende Teilbreiten oft nicht ausreichend. Bei der Aussaat wird das Saatgut in separaten Saatreihen abgelegt. Die optimalen Keim- und Wachstumsbedingungen der angepflanzten Pflanzen hängen stark von ihrem gegenseitigen Abstand ab. Somit ist die Einhaltung eines konstanten gegenseitigen Abstands des abgelegten und/oder abzulegenden Saatguts innerhalb einer jeden Saatreihe von großer Bedeutung für einen Ausbringvorgang.

Sind, wie zuvor beschrieben, einer Teilbreite mehrere Ausbringelemente zugeordnet, tritt aus geometrischen Gründen für jede dieser Teilbreiten wenigstens eine kurveninnere und eine kurvenäußere Bahn auf, für welche aber die ermittelte Winkelgeschwindigkeit identisch ist. Somit würde auf diesen beiden wenigstens vorhandenen Bahnen das Saatgut mit derselben Ausbringrate, welche aus dem erfassten Winkel bzw. aus der aus dem erfassten Winkel ermittelten Winkelgeschwindigkeit abgeleitet wird, abgelegt. In nachteiliger Weise führt dies zu inhomogenen gegenseitigen Abständen der abgelegten Saatkörner, welche auf den kurveninneren Bahnen zu klein, auf den kurvenäußeren Bahnen zu groß sind. Aus diesem Grund ist die Winkelgeschwindigkeit, deren Betrag in einer Kurve definitionsgemäß für alle Teile des Gestänges gleich ist, keine geeignete Regelgröße für eine homogene Saatgutablage.

Auch eine Regelung auf den sich während einer Kurvenfahrt einstellenden Winkel zwischen dem Zugfahrzeug und der Arbeitsmaschine ist nachteilig. In überwiegender Anzahl sind die verwendeten Sämaschinen ist als Anbausämaschine ausgeführt. Anbausämaschinen sind stets fest mit der Dreipunktkupplungsvorrichtung des Zugfahrzeugs verbunden. In diesen Fällen tritt zwischen der Sämaschine und dem Zugfahrzeug kein Winkel auf, weswegen keine Regelung auf diesen Winkel erfolgen kann.

Selbst im Falle gezogener Sämaschinen, bei deren Verwendung sich bei Kurvenfahrt ein Winkel zwischen Zugfahrzeug und Sämaschine ergeben kann, ist eine Regelung auf diesen Winkel nachteilig. Der erfassbare Winkel zwischen Zugfahrzeug und Sämaschine ist ein Ist-Wert zu einem gegebenen Zeitpunkt, der während einer konstanten Kurvenfahrt auftritt. Nimmt man dabei eine natürliche Trägheit des Regelsystems an, kann die Regelung auf den zuvor ermittelten Winkel erst zeitlich verzögert erfolgen. Vereinfacht dargestellt: Der Winkel, auf den geregelt wird, ist, insbesondere bei ungleichmäßig gekrümmten Kurven, in dem Moment, in dem die Regelung abgeschlossen ist, möglicherweise nicht mehr aktuell. In nachteiliger Weise wird auf diesem Weg keine optimale Anpassung an den Winkel-Ist-Wert und somit keine optimal auf die Kurvenfahrt abgestimmte Saatgutablage erreicht. Besonders relevant ist diese Verzögerung im Anfangsbereich und/oder Endbereich einer Kurve, sowie im Allgemeinen bei jeder Änderung des Kurvenradius. In diesen Fällen befinden sich das Zugfahrzeug und die Sämaschine in verschiedenen Bewegungszuständen. Beispielsweise befindet sich das Zugfahrzeug bereits auf einer (anders als zuvor gekrümmten) Kurvenbahn und die Sämaschine noch nicht. Der erfassbare Winkel zwischen dem Zugfahrzeug und der Sämaschine gibt dann den Bewegungszustand der Sämaschine nicht korrekt wieder und die Regelung fällt zu stark (Anfangsbereich der Kurve) oder zu schwach (Endbereich der Kurve) aus.

Zur Vermeidung der beschriebenen Problematik beschreibt die EP 1 415 523 B1 eine auf satellitengestützter Positionsbestimmung basierende Saatgutablage. Dazu ist der Sämaschine entweder ein zentraler oder jedem Ausbringelement ein eigener satellitengestützter Positionssensor zugeordnet. Über die somit bestimmbare Position eines jeden Ausbringelements wird entsprechend einer vorgegebenen Soll-Verteilung des abzulegenden Saatguts jedes Ausbringelement in geeigneter Weise angesteuert, ein nächstes abzulegendes Saatkorn an einer vorgesehenen Position oder gemäß einer vorgesehenen Rate abzulegen.

Die bei der beschriebenen satellitengestützten Saatgutablage zwingend erforderliche Satellitenverbindung der Positionsgeber kann sich nachteilig auf die Saatgutablage auswirken. Es sind Arbeitssituationen möglich, in denen beispielsweise keine (ausreichende) Satellitenverbindung zustande kommt. Für eine zuverlässige Arbeitsweise ist beispielsweise im Global-Positioning-System (GPS) stets eine Verbindung zu mindestens vier Satelliten erforderlich. Im Falle unzureichender Satellitenverbindung kann die Saatgutablage nicht in der gewünschten Weise gesteuert werden, woraus ein uneinheitliches und ertragsschwaches Säbild resultiert.

Die erreichbare Genauigkeit einer GPS-Positionsermittlung liegt in der Größenordnung eines Meters. Erst durch Erweiterungen der GPS-Methode, beispielsweise mittels der Real-Time-Kinematic-Methode oder des Differential-GPS, werden die erforderlichen Genauigkeiten im Bereich weniger Zentimeter und darunter erreicht. Beide Verfahren verlangen eine gleichzeitige Verbindung zu wenigstens fünf Satelliten. Durch Korrekturdaten, welche von einer zusätzlichen (mobilen oder ortsfesten) Referenzstation am Boden bereitgestellt werden, sind Ortsauflösungen im Millimeterbereich erreichbar. In nachteiliger Weise steigen die technologischen Ansprüche an die satellitengestützte Positionserfassung mit der gewünschten Genauigkeit. Zudem ist von einem Bediener eine zusätzliche Referenzstation einzurichten, wodurch ein weiterer sensibler sowie fehleranfälliger Arbeitsschritt hinzukommt. Somit ist die im Stand der Technik beschriebene satellitengestützte Positionserfassung mit einem erheblichen technologischen Aufwand sowie hohen Anschaffungs- und Einrichtungskosten verbunden.

Durch die DE 10 2014 102 486 A1 ist als Pflanzenschutzspritze mit einem Gestänge ausgebildete Verteilmaschine bekannt. Diese Pflanzenschutzspritze weist eine Messeinrichtung zur Erfassung von für die Kurvenfahrt und/oder den Kurvenradius repräsentativen Messwerten auf. Diese Messeinrichtung kann als Gierratensensor oder Gyroskop ausgebildet sein. Die gemessenen Werte werden für eine Regelung der Ausbringmenge der Pflanzenschutzspritze während einer Kurvenfahrt herangezogen.

Die WO 2013 049 198 A1 offenbart eine Einzelkornsämaschine, deren Gierrate bestimmt wird. Diese wird zum bedarfsgerechten Antrieb eines Saatgutförderers herangezogen, der das vereinzelte Saatgut in die Saatfurchte bringt.

Der Erfindung liegt daher die Aufgabe zugrunde, eine Sämaschine sowie ein Verfahren bereitzustellen, welche/welches das Feststellen einer Kurvenfahrt in einfacher Weise ermöglicht und basierend auf der festgestellten Kurvenfahrt die Saatgutablage entsprechend einer einstellbaren Rate steuert.

Diese Aufgabe wird erfindungsgemäß durch eine landwirtschaftliche Sämaschine nach Anspruch 1 bzw. ein Verfahren zum Betreiben einer landwirtschaftlichen Sämaschine nach Anspruch 5 gelöst.

Während einer Kurvenfahrt tritt zusätzlich zu der translatorischen Vortriebsgeschwindigkeit in Fahrtrichtung der Sämaschine ein Gieren der Sämaschine, also eine Drehung um eine zentral befindliche Hochachse, auf. Bauteile, welche entfernt von der zentral in Fahrtrichtung verlaufenden Längsachse der Sämaschine angeordnet sind erhalten somit eine vom Kurvenradius abhängige, konstante Winkelgeschwindigkeit. Dies gilt in besonderem Maße für die beabstandet zueinander quer zur Fahrtrichtung am Rahmen der Sämaschine angeordneten Dosier- und/oder Ausbringelemente. Die Dosier- und/oder Ausbringelemente weisen aufgrund ihres individuellen, insbesondere paarweise symmetrisch gleichen, Abstands zur zentralen Längsachse der Sämaschine jeweils eine individuelle Bahngeschwindigkeit während der Kurvenfahrt auf. Die Bahngeschwindigkeit der Dosier- und/oder Ausbringelemente ist von dem Radius der Kurve und vom Abstand zum Zentrum der Kurve abhängig. Das Zentrum der Kurve liegt in diesem Zusammenhang zumindest annähernd im Bereich der zentralen in Fahrtrichtung gelegenen Längsachse der Sämaschine. Sind die Abstände der einzelnen Dosier- und/oder Ausbringelemente von der zentralen Längsachse der Sämaschine und/oder dem Zentrum der Kurve bekannt und/oder zu jedem Zeitpunkt bestimmbar, ist die konkrete Bahngeschwindigkeit jedes einzelnen Dosier- und/oder Ausbringelements berechenbar. Die Berechnung der Bahngeschwindigkeit basiert auf der translatorischen Vortriebsgeschwindigkeit und der mittels der Gierratensensoren erfassten Gierrate.

Ist die Bahngeschwindigkeit der einzelnen Dosier- und/oder Ausbringelemente in der beschriebenen Weise ermittelt worden, kann eine Steuereinrichtung die Dosier- und/oder Ausbringelemente in geeigneter Weise ansteuern, sodass die Rate des abgelegten Saatguts einem zuvor eingestellten konstanten Soll-Wert entspricht. Dieser konstante Soll-Wert der Rate kann automatisiert anhand des zu verteilenden Saatguttyps und/oder des anstehenden Ausbringvorgangs mithilfe einer geeigneten Vorrichtung ermittelt und/oder manuell durch den Bediener der Steuereinrichtung zugeführt werden.

In der Landwirtschaft herrschen - abhängig vom Typ des abzulegenden Saatguts - im Wesentlichen zwei Typen der Saatgutablage vor: Drillsaat bzw. Einzelkornsaat.

Bei der Drillsaat, wie sie beispielsweise bei Getreide angewendet wird, findet eine Volumendosierung der abzulegenden Saatkörner statt. Es wird also für einen anstehenden Ausbringvorgang festgelegt, welches Saatgutvolumen pro Flächeneinheit ausgebracht werden soll. Diese Festlegung berücksichtigt beispielsweise die für die jeweilige Pflanzenart optimalen Keim- und Wachstumsbedingungen. Die Kalibrierung der Ausbringmenge erfolgt dann in an sich bekannter Weise unter Berücksichtigung einer mittleren Dichte des Typs des abzulegenden Saatguts über die Masse der geförderten Saatgutmenge. Nach Kalibrierung der Ausbringmenge erfolgt während des Ausbringvorgangs über einstellbare Dosierelemente eine stetige Dosierung des für den Ausbringvorgang erforderlichen Volumens des abzulegenden Saatguts. Damit auch bei Geschwindigkeitsschwankungen pro Flächeneinheit eine konstante Menge ausgebracht wird und somit ein einheitliches Säbild auf der gesamten zu bearbeitenden Fläche erreicht wird, ist die beschriebene Volumendosierung typischerweise von der translatorischen Vortriebsgeschwindigkeit der Sämaschine abhängig. Das Saatgut wird in Saatreihen abgelegt, wobei durch die Volumendosierung mittels der Dosierelemente stets eine Vielzahl von Saatkörnern abgelegt wird.

Im Zusammenhang mit der Drillsaat ist der Begriff der "Rate" des abzulegenden Saatguts demnach im Sinne eines pro Saatreihe und tatsächlich zurückgelegter Strecke des jeweiligen Dosierelementes konstanten Volumenstroms zu verstehen.

Bei der Einzelkornsaat hingegen erfolgt die Dosierung nicht volumetrisch. Mithilfe von Vereinzelungsvorrichtungen wird das bevorratete, abzulegende Saatgut in an sich bekannter Weise vereinzelt. Nach der Vereinzelung des abzulegenden Saatguts werden die Saatkörner pro Reihe einzeln, nacheinander abgelegt. Die Einzelkornsaat findet bei Pflanzenarten Anwendung, deren Keim- und Wachstumsbedingungen in besonderem Maße von ihrem gegenseitigen Abstand abhängig sind, wie es beispielsweise bei Mais der Fall ist. In zur Drillsaat analoger Weise steht die Vereinzelungsgeschwindigkeit zum Ausgleich von Geschwindigkeitsschwankungen in einem festen Verhältnis zur translatorischen Vortriebsgeschwindigkeit der Sämaschine.

Im Zusammenhang mit der Einzelkornsaat ist demnach der Begriff der "Rate" des abzulegenden Saatguts als ein pro Saatreihe und tatsächlich zurückgelegter Strecke des jeweiligen Ausbringelements konstanter Abstand der abgelegten Saatkörner zu verstehen.

Während einer Kurvenfahrt tritt für die Dosier- und/oder Ausbringelemente mit ihrer individuellen Bahngeschwindigkeit in der beschriebenen Weise eine zusätzliche Geschwindigkeitskomponente auf. Die Überlagerung von translatorischer Vortriebsgeschwindigkeit mit der individuellen Bahngeschwindigkeit führt für jedes Dosier- und/oder Ausbringelement individuellen resultierenden Geschwindigkeit. Für die bzgl. der zentral in Fahrtrichtung verlaufenden Längsachse der Sämaschine kurveninneren Saatreihen ist der Betrag der resultierenden Geschwindigkeit während einer Kurvenfahrt kleiner, für die der kurvenäußeren Saatreihen größer als der Betrag der translatorischen Vortriebsgeschwindigkeit der Sämaschine. Dadurch ergeben sich ohne eine Korrektur für die kurveninneren Saatreihen zu kleine Abstände, für die kurvenäußeren zu große. Diese Ungleichmäßigkeit der resultierenden Absolutgeschwindigkeiten der Dosier- und/oder Ausbringelemente wird in der beschriebenen Weise basierend auf der mittels Gierratensensoren ermittelten Gierraten ausgeglichen. Somit wird für alle Dosier- und/oder Ausbringelemente bzw. Saatreihen für die Ablage des Saatguts die gleiche Rate erreicht.

Gierratensensoren registrieren das momentane Gieren der Sämaschine. Eine auf der momentanen Gierrate basierende Regelung der Rate des abzulegenden Saatguts ist - anders als die zuvor beschriebene Regelung auf einen Winkel zwischen dem Zugfahrzeug und der Sämaschine - unabhängig von dem Bewegungszustand des Zugfahrzeugs. Die Regelung eilt dem Ist-Zustand zudem nicht nach, sondern erfolgt auf die momentane Ist-Bewegung der Sämaschine. Zusätzlich ist die erfindungsgemäße Regelung auch bei angebauten Sämaschinen verwendbar, welche keinen Winkel mit dem Zugfahrzeug einschließen können. Mit geringem baulichen Aufwand wird erfindungsgemäß in einfacher Weise eine Anpassung der Rate des abzulegenden Saatguts an die tatsächlichen Bahngeschwindigkeiten der einzelnen Dosier- und/oder Ausbringelemente erreicht.

Es ist von Vorteil, dass zumindest ein Gierratensensor zentral an der Sämaschine angeordnet ist. Die Gierrate der Sämaschine beschreibt ihre Drehbewegung um eine zentral befindliche Hochachse während einer Kurvenfahrt. Diese Gierrate ist für die gesamte Sämaschine konstant. In vorteilhafterweise Weise ist daher ein zentral angeordneter Gierratensensor ausreichend für die zuverlässige Bestimmung der Gierrate. Dies hält den baulichen Aufwand sowie die Anschaffungskosten einer erfindungsgemäßen Erfassungsvorrichtung gering.

Zur Steigerung der Ausfallsicherheit und zur Steigerung der Genauigkeit können zwei oder mehr Gierratensensoren vorgesehen sein. Da die Einhaltung eines optimalen Säbildes starke Auswirkungen auf den Ertrag der bepflanzten Fläche hat, ist es besonders wichtig, eine hohe Genauigkeit der Saatgutablage sicherzustellen. Im Rahmen statistischer Messwerterfassung ist bekannt, dass durch die unabhängige Erfassung des gleichen Messwerts, beispielsweise mittels zweier Sensoren, die Genauigkeit der Erfassung insgesamt steigt. Insbesondere ist die Funktionalität der Erfassungsvorrichtung auch bei Ausfall eines Gierratensensors sichergestellt. Somit wird durch eine mehrfache Ausführung des Gierratensensors bei einem nur geringen baulichen und finanziellen Mehraufwand in überraschender Weise eine erhebliche Verbesserung der Genauigkeit bei der Steuerung der Rate des abzulegenden Saatguts erreicht. Es ist also vorteilhaft, dass die Sämaschine zumindest zwei Gierratensensoren umfasst.

Die Erfindung wird in vorteilhafter Weise weitergebildet, indem jeweils ein Gierratensensor an den äußeren Enden des Rahmens angeordnet ist. An den jeweils äußeren Enden des sich quer zur Fahrrichtung erstreckenden Rahmens der Sämaschine treten kurvenfahrtbedingt die größten Bewegungsamplituden auf. Jeder Sensor weist zudem stets eine immanente Messungenauigkeit auf. Bei der Erfassung betragsmäßig kleiner Messgrößen wiegt diese immanente Messungenauigkeit schwerer als bei der Erfassung betragsmäßig großer Messgrößen, wie beispielsweise der großen Bewegungsamplituden der äußeren Bereiche des Rahmens der Sämaschine. Aus diesem Grund gewährleistet die Anordnung der Gierratensensoren im Bereich des jeweils äußeren Endes des Rahmens eine hohe Genauigkeit der erfassten Messwerte.

Damit während eines Ausbringvorgangs die Rate des abzulegenden Saatguts während einer Kurvenfahrt für ein jedes Dosier- und/oder Ausbringelement stets an den momentanen Kurvenradius angepasst werden kann, ist erfindungsgemäß ein Verfahren zum Betreiben der erfindungsgemäßen landwirtschaftlichen Sämaschine, insbesondere Einzelkornsämaschine, vorgesehen. In vorteilhafter Weise umfasst das erfindungsgemäße Verfahren die folgenden Verfahrensschritte:
- kontinuierliche Erfassung der momentanen Gierrate der Sämaschine während eines Ausbringvorgangs,
- Übermitteln der erfassten Gierraten an die Steuereinrichtung,
- Ermitteln der Bahngeschwindigkeit eines jeden Dosier- und/oder Ausbringelements auf Basis der ermittelten Gierrate,
- Generieren von Steuersignalen für die Dosier- und/oder Ausbringelemente auf Basis ihrer Bahngeschwindigkeiten und einer Soll-Rate des abzulegenden Saatguts und
- Ansteuern der Antriebseinheiten der Dosier- und/oder Ausbringelemente mithilfe der Steuersignale.

Durch diese Maßnahmen liegt zu jedem Zeitpunkt eines Ausbringvorgangs die momentane gemessene Gierrate der Sämaschine vor. Damit die Steuereinrichtung der Sämaschine aus den ihr zugeführten gemessenen Gierraten die tatsächliche Bahngeschwindigkeit eines jeden Dosier- und /oder Ausbringelements ermitteln kann, muss der Abstand eines jeden Dosier- und/oder Ausbringelements der Sämaschine von der zentral in Fahrtrichtung verlaufenden Längsachse der Maschine bekannt sein.

Erfindungsgemäß sind im Falle veränderlicher Abstände der Dosier- und/oder Ausbringelemente von der zentral in Fahrtrichtung verlaufenden Längsachse der Sämaschine sind entsprechende Mittel vorzusehen, welche der Steuereinrichtung der Sämaschine den tatsächlichen Abstand der Dosier- und/oder Ausbringelemente von der zentral in Fahrtrichtung verlaufenden Längsachse der Sämaschine zuführen. Ein veränderlicher Abstand wird beispielsweise bei teleskopierbaren Rahmen und/oder bei Sämaschinen mit variabler Saatreihenanzahl, bzw. allgemein bei Sämaschinen variabler Arbeitsbreite, möglich.

Die Ermittlung der Bahngeschwindigkeit eines jeden Dosier- und/oder Ausbringelements erfolgt nach an sich bekannten physikalischen Gesetzmäßigkeiten für kreisförmige Rotationsbewegungen. Dabei wird ausgenutzt, dass jede Kurvenfahrt in geeignete Kreisbogenabschnitte zerlegen lässt. Somit kann die Kurvenfahrt zumindest abschnittsweise als Kreisbewegung mit Radius *̅r̅*̅ aufgefasst werden. Für kreisförmige Bewegungen gilt zwischen Radius *̅r̅*̅, Winkelgeschwindigkeit *̅ω̅*̅ (entsprechend einer Gierrate), und Bahngeschwindigkeit *̅v̅*̅ allgemein der Zusammenhang *̅v̅*̅ = *̅ω̅*̅ × *̅r̅*̅, welcher sich im Spezialfall ebener Geometrie auf das Produkt der Beträge *v = ω* · *r* reduziert. Der Radius *̅r̅*̅ bezieht sich dabei auf den Abstand eines betrachteten Punktes, beispielsweise eines Dosier- und/oder Ausbringelements, vom Mittelpunkt des die Kurvenbahn zumindest näherungsweise beschreibenden Kreisbogenabschnitts. Die Bahngeschwindigkeit *̅v̅*̅ beschreibt die Bewegungskomponente des betrachteten Punktes, beispielsweise eines Dosier- und/oder Ausbringelements, welche in der Kreisebene senkrecht auf dem

Radius *̅r̅*̅ steht (*̅v̅*̅ ⊥ *̅r̅*̅). Durch die Kombination des Gierens der Sämaschine mit ihrer translatorischen Vortriebsbewegung umfasst die Gesamtbewegung der Sämaschine im Allgemeinen zusätzliche Geschwindigkeitskomponenten. Die jeweils zur Berechnung der Bahngeschwindigkeiten der Dosier- und/oder Ausbringelemente herangezogene Kreisbewegung ist abhängig vom tatsächlichen Kurvenradius und somit an den jeweils tatsächlichen Kurvenradius anzupassen. Über die gemessene Gierrate und die bekannte Vortriebsgeschwindigkeit der Sämaschine ist der tatsächliche Kurvenradius in analoger Weise ermittelbar.

Die zentral (Maschinenmitte) in Fahrtrichtung liegende Längsachse der Sämaschine befindet sich während einer Kurvenfahrt nicht im Mittelpunkt der beschriebenen Kreisbewegung, sondern weist selbst einen vom Kurvenradius abhängigen Abstand zu diesem Mittelpunkt der Kreisbewegung auf. Für eine homogene Saatgutablage während eines Ausbringvorgangs ist der Unterschied der Bahngeschwindigkeiten der Dosier- und/oder Ausbringelemente bzgl. dieser zentral in Fahrtrichtung liegenden Längsachse bedeutend. Es ist daher möglich, die Bestimmung der Bahngeschwindigkeit eines jeden Dosier- und/oder Ausbringelements auf die Bahngeschwindigkeit des Bereichs des die Dosier- und/oder Ausbringelemente tragenden Rahmens der Sämaschine zu normieren, den die zentral in Fahrtrichtung liegende Längsachse der Sämaschine schneidet. Vereinfacht bedeutet dies, dass die in zentral Fahrtrichtung liegende Längsachse der Sämaschine zu jedem Zeitpunkt einer Kurvenfahrt eine spezifische Norm-Bahngeschwindigkeit aufweist und die Bahngeschwindigkeiten kurvenäußerer (kurveninnerer) Dosier- und/oder Ausbringelemente größer (kleiner) als diese Norm-Bahngeschwindigkeit ist.

Ist die Bahngeschwindigkeit eines jeden Dosier- und/oder Ausbringelements auf die beschriebene Weise bestimmt worden, werden durch die Steuereinrichtung der Sämaschine geeignete Steuersignale für die Dosier- und/oder Ausbringelemente generiert.

Der Betrieb eines jeden Dosier- und/oder Ausbringelements erfolgt mit einer Soll-Rate für die Ablage des abzulegenden Saatguts. Die Soll-Rate wird der Steuereinrichtung in der zuvor beschriebenen Weise zugeführt und dient als Grundwert für die Saatgutablage. Eine Saatgutablage aller Dosier- und/oder Ausbringelemente gemäß der Soll-Rate erfolgt immer dann, wenn die Sämaschine neben der translatorischen Vortriebsgeschwindigkeit keine zusätzliche Bahngeschwindigkeitskomponente aufweist, sich also außerhalb einer Kurvenfahrt befindet. Ein sich etwaig auf der zentral in Fahrtrichtung liegenden Längsachse befindliches Dosier- und/oder Ausbringelement legt während des Ausbringvorgangs das Saatgut immer - auch während einer Kurvenfahrt - gemäß der Soll-Rate ab. In diesen Fällen wird keine Gierrate gemessen und/oder die von der Steuereinrichtung für die Dosier- und/oder Ausbringelemente generierten Steuersignale nicht von der Gierrate beeinflusst. Für Dosier- und/oder Ausbringelemente, die beabstandet zu der zentral in Fahrtrichtung liegenden Längsachse der Sämaschine am Rahmen der Sämaschine angeordnet sind, wird auf Basis der gemessenen Gierrate und/oder der aus der gemessenen Gierrate bestimmten individuellen Bahngeschwindigkeit eines Dosier- und/oder Ausbringelements ein Steuersignal generiert, welches die Rate der Saatgutablage eines jeden Dosier- und/oder Ausbringelements in auf die jeweilige Bahngeschwindigkeit des Dosier- und/oder Ausbringelements abgestimmter Weise verändert. Für kurvenäußere (kurveninnere) Dosier- und/oder Ausbringelemente wird die Rate der Saatgutablage gegenüber der Soll-Rate erhöht (verringert). Die jeweiligen Dosier- und/oder Ausbringelemente werden mithilfe dieser generierten Steuersignale angesteuert und somit auch während einer Kurvenfahrt ein homogenes Säbild eingehalten.

Es ist von Vorteil, dass für jedes Dosier- und/oder Ausbringelement auf Basis der Bahngeschwindigkeiten der Dosier- und/oder Ausbringelemente und der Soll-Rate des abzulegenden Saatguts ein zu der Soll-Rate des abzulegenden Saatguts passender Ablagezeitpunkt des abzulegenden Saatguts bestimmt wird. Ist für ein Dosier- und/oder Ausbringelement, insbesondere einer Einzelkornsämaschine, der Zeitpunkt der nächsten bevorstehenden Saatgutablage bekannt, kann das abzulegende Saatkorn mit sehr großer Genauigkeit im Boden abgelegt werden. Durch diese Maßnahme wird die Ablagequalität der Sämaschine erheblich verbessert.

Es wird ein erheblicher Vorteil erreicht, indem in das Generieren der Steuersignale für jedes Dosier- und/oder Ausbringelement die Soll-Rate als ein Grundwert und die ermittelte Gierrate und/oder Bahngeschwindigkeit des jeweiligen Dosier- und/oder Ausbringelements als ein Faktor einfließen. In der beschriebenen Weise wird die Bahngeschwindigkeit eines jeden Dosier- und/oder Ausbringelements wesentlich durch die Vortriebsgeschwindigkeit der Sämaschine bestimmt. Zudem ist der Zusammenhang zwischen der Bahngeschwindigkeit eines jeden Dosier- und/oder Ausbringelements und dessen Abstand *r* vom Mittelpunkt eines die Kurvenbahn zumindest näherungsweise beschreibenden Kreisbogenabschnitts in der linearen Form *v = ω* · *r* gegeben. Somit ist durch das Einfließen der gemessenen Gierrate und/oder der daraus für ein jedes Dosier- und/oder Ausbringelement ermittelten Bahngeschwindigkeit als Faktor in das Generiegen der Steuersignale durch die Steuereinrichtung eine besonders einfache Möglichkeit gegeben, die Rate der Saatgutablage an die aus dem momentanen Bewegungszustand der Sämaschine resultierenden Erfordernisse anzupassen. Durch diese Maßnahme ist die Anpassung über die Arbeitsbreite der Sämaschine linear und damit besonders leicht handhabbar.

Besonders vorteilhaft ist es dabei, wenn die Bahngeschwindigkeit am Ort der zentral in Fahrtrichtung liegenden Längsachse der Sämaschine als Normbahngeschwindigkeit betrachtet wird. Dies ist möglich, weil die zentral in Fahrtrichtung liegende Längsachse als Bewegungszentrum der Sämaschine betrachtet wird, welches die Gesamtbewegung der Maschine beschreibt, und ein sich etwaig auf dieser zentral in Fahrtrichtung liegenden Längsachse der Sämaschine befindliches Dosier- und/oder Ausbringelement zur Saatgutablage stets mit der Soll-Rate betrieben wird. Relevant für die Einhaltung eines homogenen Säbildes sind dann die Bahngeschwindigkeitsdifferenzen der jeweiligen Dosier- und/oder Ausbringelemente bzgl. dieser zentral in Fahrtrichtung liegenden Längsachse. Aufgrund des zuvor beschriebenen Zusammenhangs erfolgt die Anpassung der Rate der Saatgutablage dann in einfacher Weise über einen Faktor, welcher im Wesentlichen den Anteil der Bahngeschwindigkeit des jeweiligen Dosier- und/oder Ausbringelements an der Norm-Bahngeschwindigkeit umfasst. Dabei kann der Faktor für kurveninnere Saatreihen kleiner Eins, für die zentral in Fahrtrichtung liegende Längsachse gleich Eins und für kurvenäußere Saatreihen größer Eins sein.

Es ist vorteilhaft, dass der Steuereinrichtung zusätzlich zur Gierrate weitere Messdaten zugeführt werden. Durch diese Maßnahme kann die Genauigkeit der Saatgutablage weiter gesteigert werden. Weitere Messdaten können beispielsweise momentane Positions- und/oder Abstandsdaten der Dosier- und/oder Ausbringelemente bzgl. der zentral in Fahrtrichtung der Sämaschine liegenden Längsachse sein.

In analoger Weise können dem Verfahren auch weitere, beispielsweise in einer der Steuereinrichtung zugeordneten Speichereinheit hinterlegte, Daten dem beschriebenen Verfahren zugeführt werden. Derartige Daten können Einstellungsparameter der Sämaschine, Bewirtschaftungsdaten und/oder Charakteristika der zu bearbeitenden Nutzfläche umfassen.

Es ist weiterhin von Vorteil, dass das in die Generierung des Steuersignals eines Dosier- und/oder Ausbringelements die bestimmten Ablagezeitpunkte anderer Dosier- und/oder Ausbringelemente einfließen. Auf diese Weise wird, insbesondere für eine Einzelkornsämaschine, eine homogene Saatgutablage über die gesamte Arbeitsbreite der Sämaschine erreicht.

Es ist vorteilhaft, dass eine auf die bestimmten Ablagezeitpunkte des abzulegenden Saatguts abgestimmte Ablage des abzulegenden Düngemittels erfolgt. Bei gleichzeitiger Ablage von Saatgut und Düngemittel während eines Ausbringvorgangs ist die aufeinander abgestimmte Dosierung von großer Bedeutung. Optimale Keim- und/oder Wachstumsbedingungen für die aus dem abgelegten Saatgut entstehenden Pflanzen werden nur mit einer optimierten Düngemittelmenge erreicht. Die Ablage von Düngemittel kennt dabei im Allgemeinen keine Unterscheidung zwischen Einzelkorn- oder Drillsaat. Die Dosierung von Düngemittel erfolgt in jedem Fall volumetrisch. Die volumetrische Dosierung des abzulegenden Düngemittels ist somit analog zur zuvor beschriebenen volumetrischen Dosierung bei der Drillsaat anhand der gemessenen Gierrate und/oder der aus der gemessenen Gierrate ermittelten Bahngeschwindigkeit eines jeden Dosier- und/oder Ausbringelements vorzunehmen. Somit wird in einfacher Weise stets eine auf die Saatgutablage optimierte Düngemittelablage erreicht.

Weitere Einzelheiten der Erfindung sind der Beispielsbeschreibung und den Zeichnungen zu entnehmen. Die Zeichnungen zeigen
- Fig.1: eine an einem Zugfahrzeug angebaute landwirtschaftliche Einzelkornsämaschine in perspektivischer Ansicht von schräg hinten,
- Fig.2: ein Ausbringelement einer landwirtschaftlichen Einzelkornsämaschine in Explosionsdarstellung perspektivisch von schräg vorne,
- Fig.3: ein Vereinzelungselement einer landwirtschaftlichen Einzelkornsämaschine in perspektivischer Darstellung,
- Fig.4: eine landwirtschaftliche Sämaschine zur Drillsaat in perspektivischer Darstellung von schräg hinten,
- Fig.5: ein Dosierelement einer landwirtschaftlichen Sämaschine in seitlicher Ansicht und
- Fig.6: eine schematische Darstellung während einer Kurvenfahrt homogen abgelegten Saatguts.

Landwirtschaftliche Sämaschinen 1 sind zur Ausbringung von Saatgut in den Erdboden einer Nutzfläche vorgesehen. Dazu werden Sämaschinen 1 an ein Zugfahrzeug 2 angehängt oder angebaut und über die Nutzfläche bewegt.

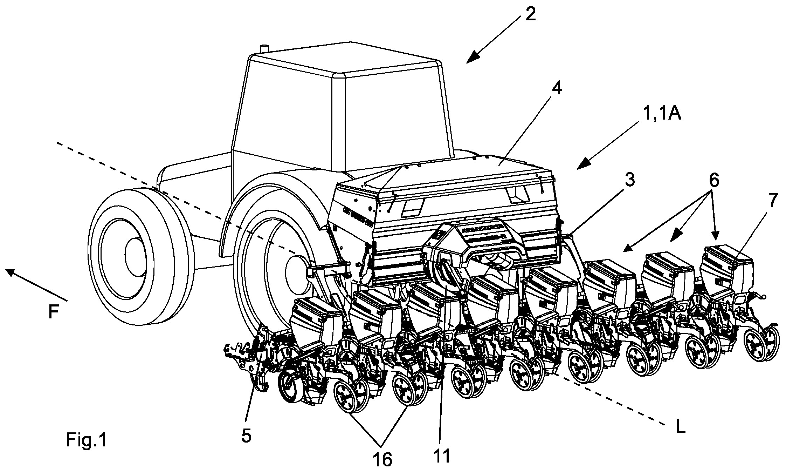

Landwirtschaftliche Sämaschinen 1 können zur Einzelkornsaat oder zur Drillsaat ausgebildet sein. Fig. 1 zeigt eine an das Zugfahrzeug 2 angebaute Einzelkornsämaschine 1A. Die Einzelkornsämaschine 1A weist einen Rahmen 3 auf, auf dem sich ein quer zur Fahrtrichtung F ein zentraler Vorratsbehälter 4 zur Bevorratung von zu verteilendem Saatgut und/oder Düngemittel abstützt. Weiterhin umfasst der Rahmen 3 der Einzelkornsämaschine 1A einen sich quer zur Fahrtrichtung erstreckenden Querbalken 5, an welchem beabstandet zueinander eine Vielzahl an Ausbringelementen 6 angeordnet ist.

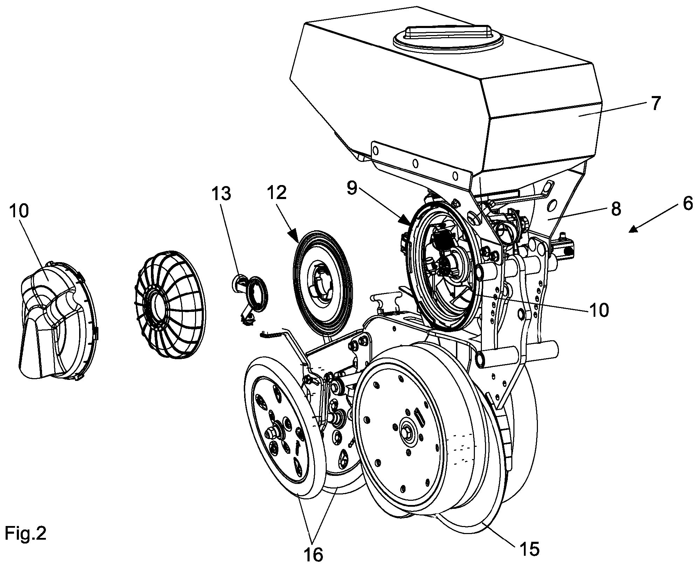

Die Ausbringelemente 6, wie eines in Fig. 2 gezeigt ist, sind mittels nicht dargestellter Trageelemente an dem Querbalken 5 befestigt. Ein derartiges Ausbringelement 6 umfasst einen Vorratsbehälter 7 zur Bevorratung von Saatgut, welcher auf den Rahmenbauteilen 8 des Ausbringelements 6 abgestützt ist. Unterhalb des Vorratsbehälters 7 ist eine Vereinzelungsvorrichtung 9 angeordnet.

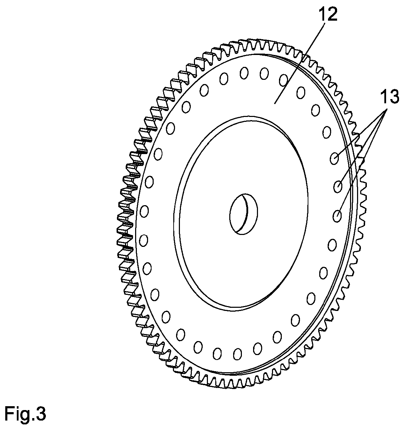

Die Vereinzelungsvorrichtung 9 umfasst ein Gehäuse 10, welches mithilfe eines Gebläses 11 mit Überdruck oder Unterdruck beaufschlagt wird. Das Innere des Gehäuses 10 wird durch ein rotierend angetriebenes, als Vereinzelungsscheibe ausgebildetes Vereinzelungselement 12 (gezeigt in Fig. 3) in zwei Gehäusebereiche unterteilt. Zusammenwirkend mit dem mittels Gebläse 11 beaufschlagten Unter- oder Überdruck bewirkt die Unterteilung des Inneren des Gehäuses 10 mittels des Vereinzelungselements 12 eine Druckdifferenz zwischen den beiden Gehäusebereichen.

Das als Vereinzelungsscheibe ausgebildete Vereinzelungselement 12 weist in seinem in radialer Richtung äußeren Bereich in Umfangsrichtung gleichmäßig zueinander beabstandete Durchbrüche 13 auf. Die Durchbrüche 13 unterbrechen die zwischen den beiden Gehäusebereichen bestehende Druckdifferenz und dienen der Mitnahme einzelner Saatkörner. Die auf diese Weise vereinzelten Saatkörner werden an geeigneter Stelle mithilfe eines Auswerfelements 14 von dem Vereinzelungselement 12 abgelöst und Richtung Erdboden befördert.

Zur Ablage der Saatkörner in den Erdboden wird mithilfe eines dem Ausbringelement 6 zugeordneten Furchenöffners 15 eine Furche in den Erdboden gezogen. Der Furchenöffner 15 ist im Beispiel der Fig. 2 als Doppelscheibenschar ausgeführt. In an sich bekannter Weise kann der Furchenöffner aber alternativ als Einscheibenschar, Zinkenschar, Schleppschar oder ein anderer in seiner Funktionalität vergleichbarer Schartyp ausgeführt sein. Das in der beschriebenen Weise vereinzelte Saatgut wird über eine nicht dargestellte Saatgutleitung in die durch den Furchenöffner geöffnete Furche abgelegt. Das in der Furche abgelegte Saatgut wird durch Bedeckungselemente 16 mit Erdboden bedeckt. In Fig. 2 sind die Bedeckungselemente 16 als Andruckrollen ausgeführt. Eine alternative Ausführung beispielsweise als Striegelelemente ist ebenso möglich.

Jedem der beschriebenen Ausbringelemente 6 ist eine Antriebseinheit zugeordnet, welche das Vereinzelungselement 12 in Rotation versetzt. Derartige der Einzelkornsämaschine 1A zugeordnete Antriebseinheiten sind mit einer Steuereinrichtung verbunden, welche dazu vorgesehen ist, die Drehzahl eines jeden Vereinzelungselements 12 auf Basis der Steuereinrichtung zugeführter Daten individuell zu steuern.

Nach der Vereinzelung des abzulegenden Saatguts werden die Saatkörner pro Saatreihe einzeln, nacheinander abgelegt. Durch eine Variation der Drehzahl des Vereinzelungselements 12 wird die Rate des Richtung Erdboden abgegebenen Saatguts beeinflusst. Im Zusammenhang mit der Einzelkornsaat ist demnach der Begriff der "Rate" des abzulegenden Saatguts als ein pro Saatreihe und tatsächlich zurückgelegter Strecke des jeweiligen Ausbringelements konstanter Abstand der abgelegten Saatkörner zu verstehen. Durch eine gerichtete Ansteuerung der Antriebseinrichtung des Vereinzelungselements 12 durch die Steuereinrichtung können Ungleichmäßigkeiten kompensiert und ein homogenes Säbild erreicht werden.

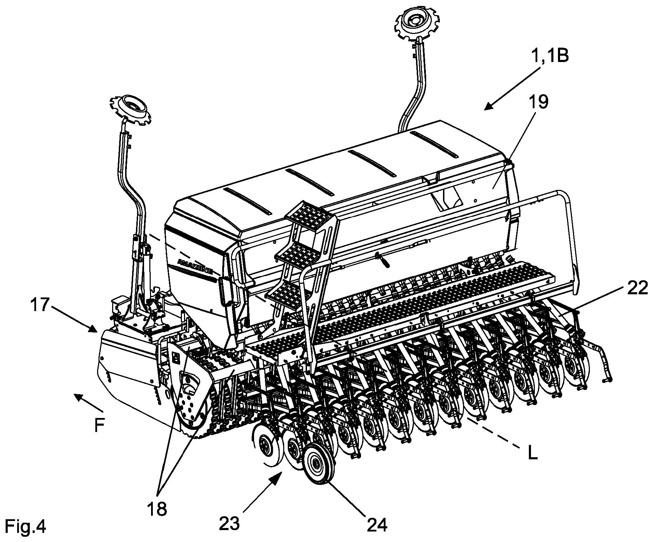

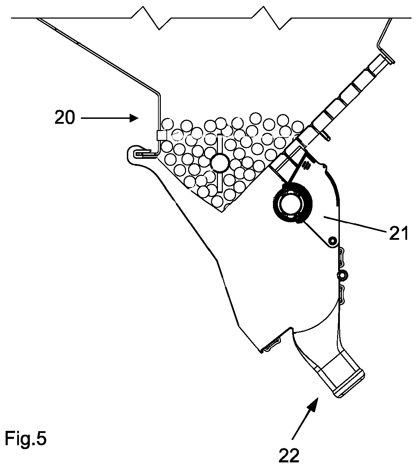

Eine zur Drillsaat als Drillmaschine 1B ausgeführte Sämaschine 1 ist in Fig. 4 dargestellt. Die Drillmaschine 1B ist auf eine Kreiselegge 17 aufgebaut und umfasst einen sich quer zur Fahrtrichtung F erstreckenden Rahmen 18. Auf dem Rahmen 18 stützt sich ein zentraler Vorratsbehälter 19 zur Bevorratung von Saatgut und/oder Düngemittel ab. Der Vorratsbehälter 18 weist in seinem unteren Bereich einen zumindest annähernd trichterförmig ausgestalteten Auslaufbereich 20 auf, wie er in Fig. 5 gezeigt ist. Unterhalb des Auslaufbereichs 20 ist eine Vielzahl von Dosierelementen 21 angeordnet. Die Dosierelemente 21 sind rotierend angetrieben und als Zellenräder ausgebildet. Die Zellen der Zellenräder dienen der Mitnahme einer ihrem Volumen entsprechenden Saatgutmenge. Die Drehzahl der Dosierelemente 21 bestimmt somit die gesamte transportierte Saatgutmenge.

Über die Dosierelemente 21 wird das zu verteilende Material in einstellbaren Mengen in Richtung Erdboden führende Saatgutleitungen 22 eingespeist. Mithilfe als Doppelscheibenschare ausgeführter Furchenöffner 23 werden Furchen in den Erdboden gezogen, in welche das Saatgut mithilfe der Saatgutleitungen 22 eingebracht wird. In zur Einzelkornsaat analoger Weise ist die Verwendung von alternativ ausgeführten Furchenöffnern möglich. Nachlaufende Bedeckungselemente 24 bedecken das in der Furche abgelegte Saatgut mit Erdboden.

Die der Drillmaschine 1B zugeordneten Dosierelemente 21 weisen jeweils eine individuelle Antriebseinheit auf. Die Antriebseinheiten der Dosierelemente 21 sind mit einer Steuereinrichtung verbunden, welche dazu vorgesehen ist, die Drehzahl eines jeden Dosierelements 21 auf Basis der Steuereinrichtung zugeführter Daten individuell zu steuern. Über die Drehzahl der Dosierelemente 21 wird bei der volumetrischen Dosierung der Drillsaat die Menge des ausgebrachten Saatguts reguliert. Im Zusammenhang mit der Drillsaat ist der Begriff der "Rate" des abzulegenden Saatguts demnach im Sinne eines pro Saatreihe und tatsächlich zurückgelegter Strecke des jeweiligen Dosierelementes konstanten Volumenstroms zu verstehen.

Bei einer Geradeausfahrt des Zugfahrzeugs 2 mit angebauter Sämaschine 1,1A,1B, kann bei bekannter momentaner Vortriebsgeschwindigkeit mithilfe der beschriebenen Steuerung der Drehzahlen von Dosierelement 21 bzw. Vereinzelungselement 12 mittels der Steuereinrichtung die Rate des abgelegten Saatguts an die momentane Vortriebsgeschwindigkeit der Sämaschine 1,1A,1B angepasst werden.

Bei Kurvenfahren der Sämaschine 1,1A,1B ergeben sich für die beabstandet zueinander am Rahmen 3,18 der Sämaschine 1,1A,1B Dosierelemente 21 bzw. Ausbringelemente 6 individuelle Bahngeschwindigkeiten. Die Bahngeschwindigkeiten der Dosierelemente 21 bzw. Ausbringelemente 6 hängen von der Vortriebsgeschwindigkeit der Sämaschine, dem Kurvenradius sowie ihrem Abstand von der zentral in Fahrtrichtung F gelegenen Längsachse L der Sämaschine 1,1A,1B ab.

Eine Kurvenfahrt lässt sich stets in geeignete Kreisbogenabschnitte zerlegen und sich somit abschnittsweise durch Kreisbewegungen mit dem Radius *̅r̅*̅ annähern.

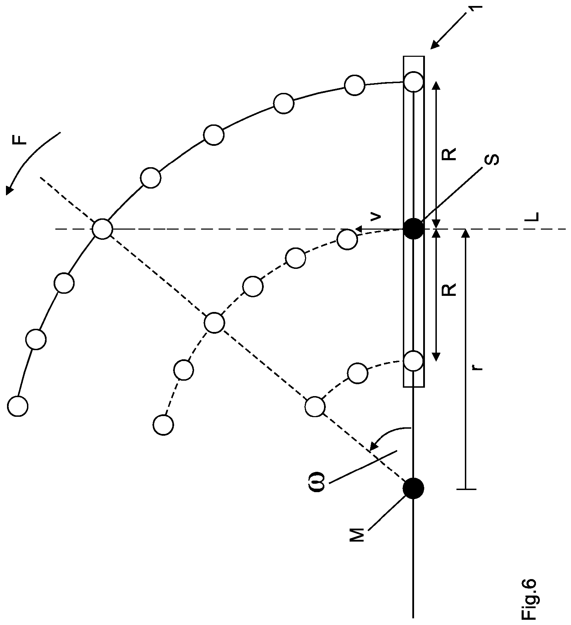

Für Kreisbewegungen gilt der Zusammenhang *̅v̅*̅ = *̅ω̅*̅ × *̅r̅*̅, wobei *̅v̅*̅ die senkrecht zum Radius gerichtete Bahngeschwindigkeit und *̅ω̅*̅ die korrespondierende Winkelgeschwindigkeit (Gierrate) ist. Die geometrischen Zusammenhänge sind in Fig. 6 dargestellt. Der Radius *̅r̅*̅ beschreibt den Abstand zum Mittelpunkt M des die Kurvenbewegung annähernden Kreisbogenabschnitts. Im Falle ebener Geometrie kann der Zusammenhang vereinfacht in der Form *v = ω* · *r* behandelt werden.

Bezugspunkt dieser Berechnungen ist in bevorzugter Weise ein Schnittpunkt S der zentral in Fahrtrichtung F gelegenen Längsachse L der Sämaschine 1,1A,1B mit der quer zur Fahrtrichtung verlaufenden Achse, auf der die Dosierelemente 21 bzw. die Ausbringelemente 6 angeordnet sind. Die zentral in Fahrtrichtung F gelegene Längsachse L verläuft während einer Kurvenfahrt demnach tangential zur Umfangsrichtung des angenäherten Kreisbogenabschnitts und somit ebenfalls tangential zur während der Kurvenfahrt gekrümmten Fahrtrichtung F.

Zur Messung der Gierrate (Winkelgeschwindigkeit) ist der Sämaschine 1,1A,1B zumindest ein Gierratensensor zugeordnet. Der Gierratensensor misst während eines Ausbringvorgangs stetig die momentane Gierrate und führt die gemessenen Gierraten der Steuereinrichtung zu. Die Steuereinrichtung ermittelt aus den gemessenen Gierraten die momentanen Bahngeschwindigkeiten der Dosierelemente 21 und/oder Ausbringelemente 6. Zu diesem Zweck muss der individuelle Abstand R eines jeden Dosierelements 21 und/oder Ausbringelements 6 zu der zentral in Fahrtrichtung F gelegenen Längsachse L der Sämaschine 1,1A,1B bekannt sein. Der Abstand *R* wird zwischen einem jeden Dosierelement 21 bzw. Ausbringelement 6 und dem Schnittpunkt S gemessen.

Der tatsächliche Abstand eines jeden Dosierelements 21 und/oder Ausbringelements 6 vom Mittelpunkt M des angenäherten Kreisbogenabschnitts ist durch die Summe *r + R* (bzw. Differenz *r* - *R*) für bezüglich des Schnittpunktes S kurvenäußere (kurveninnere) Dosierelemente 21 und/oder Ausbringelemente 6 gegeben. Auf dieser Basis lässt sich in einfacher Weise die korrespondierende Bahngeschwindigkeit errechnen und die Rate der Saatgutablage in geeigneter Weise für jedes Dosierelement 21 und/oder Ausbringelement 6 anpassen.

Die Saatgutausbringung erfolgt sowohl bei Einzelkornsaat, als auch bei Drillsaat auf Basis einer als Grundwert dienenden Soll-Rate. Die Soll-Rate wird beispielsweise durch die Vortriebsgeschwindigkeit der Sämaschine 1,1A,1B und/oder durch für optimale Keim- und Wachstumsbedingungen der Pflanzen notwendige Abstanderfordernisse festgelegt. Aus geometrischen Gründen ist die Rate des abzulegenden Saatguts für ein Dosierelement 21 und/oder ein Ausbringelement 6, welches sich auf der zentral in Fahrtrichtung F gelegenen Längsachse L der Sämaschine 1,1A,1B befindet stets gleich der Soll-Rate, solange sich die Vortriebsgeschwindigkeit nicht ändert. Insbesondere bewegt sich der Schnittpunkt S daher mit einer neutralen Norm-Bahngeschwindigkeit entlang der Kurvenbahn. Für kurvenäußere (kurveninnere) Dosierelemente 21 und/oder Ausbringelemente 6 ist die Rate des abzulegenden Saatguts größer (kleiner) als der Grundwert der Soll-Rate, da deren Bahngeschwindigkeiten von der Norm-Bahngeschwindigkeit abweichen. Durch die lineare Abstandsabhängigkeit und die bekannten Abstände R der Dosierelemente 21 und/oder der Ausbringelemente 6 vom Schnittpunkt S wird zur Anpassung der Rate des abzulegenden Saatguts der Grundwert der Soll-Rate um den Anteil der Bahngeschwindigkeit des jeweiligen Dosierelements 21 und/oder des Ausbringelements 6 an der Norm-Bahngeschwindigkeit variiert. Somit wird eine Anpassung der Rate des abzulegenden Saatguts erreicht, bei welcher die gemessene Gierrate bzw. die daraus ermittelte Bahngeschwindigkeit eines jeden Dosierelements 21 und/oder Ausbringelements 6 als Faktor eingeht.

Insbesondere für die Einzelkornsaat ist es somit bei einer bekannten (mittleren) Dauer, die ein Saatkorn zum Zurücklegen der Strecke zwischen Vereinzelungselement 12 und Furche benötigt, möglich, den Zeitpunkt zu bestimmen, wann ein nächstes Saatkorn von dem Vereinzelungselement abgelöst werden muss. Bei bekannten Saatreihenabständen ist überdies ein gegenseitiger Bezug der Ablagezeitpunkte der benachbarter oder aller Reihen herstellbar.

Durch die Variation der Drehzahl der Vereinzelungselemente 6 bzw. der Dosierelemente 21 ist dieses Verfahren sowohl für die Drillsaat, als auch für die Einzelkornsaat in analoger Weise anwendbar.

In dem beschriebenen Beispiel werden die Messdaten, welche zumindest die Gierrate der Sämaschine 1 umfassen, der Steuereinrichtung zugeführt. Die Messdaten können zusätzlich weitere Größen anderer Erfassungseinrichtungen umfassen, beispielsweise die Vortriebsgeschwindigkeit. Zusätzlich können der Steuereinrichtung Daten anderer Art, beispielsweise in einer Speichereinheit hinterlegte oder mittels Bedienereingabe eingepflegte Daten, zugeführt werden.

Die Steuereinrichtung berechnet für jedes Dosierelemente 21 und/oder Ausbringelemente 6 auf Basis der Soll-Rate des abzulegenden Saatguts sowie zumindest der gemessenen Gierrate und/oder der daraus ermittelten Bahngeschwindigkeit eines jeden Dosierelements 21 und/oder Ausbringelements 6 die zur Einhaltung der Soll-Rate der Saatgutablage während der Kurvenfahrt notwendige Drehzahlvariation. Basierend auf der ermittelten Drehzahlvariation kann die Steuereinrichtung geeignete Steuersignale zum Ansteuern der Antriebseinheit eines jeden Dosierelements 21 und/oder Ausbringelements 6 generieren und die Antriebseinheiten mithilfe der generierten Steuersignale ansteuern.

Alternativ kann die durch die Steuereinrichtung ermittelte Bahngeschwindigkeit eines jeden Dosierelements 21 und/oder Ausbringelements 6 von der Steuereinrichtung den Dosierelementen 21 und/oder Ausbringelementen 6 bzw. deren Antriebseinheiten jeweils individuell oder abschnittsweise zugeordneten Unter-Steuereinrichtungen zugeführt werden. Die Unter-Steuereinrichtungen generieren dann in analoger Weise Steuersignale zum Ansteuern der Antriebseinheiten eines jeden Dosierelements 21 und/oder Ausbringelements 6 und steuern die Dosierelemente 21 und/oder Ausbringelemente 6 mithilfe der generierten Steuersignale an.

Alternativ kann das für jedes Dosierelement 21 und/oder Ausbringelement 6 von der Steuereinrichtung generierte Steuersignal einer jeweils individuell oder abschnittweise den Dosierelementen 21 und/oder Ausbringelementen 6 zugeordneten Unter-Steuereinrichtung zugeführt werden. Die Unter-Steuereinrichtungen können das Steuersignal geeignet weiterverarbeiten und steuern die Antriebseinheit des Dosierelements 21 und/oder Ausbringelements 6 an.

Zusätzlich ist das das beschriebene Verfahren für die homogene Dosierung von zeitgleich mit dem Saatgut ausgebrachtem Düngemittel anwendbar. Die Dosierung von Düngemittel erfolgt dabei stets volumetrisch.

## Patentansprüche

1. Landwirtschaftliche Sämaschine (1,1A,1B), insbesondere Einzelkornsämaschine (1A), zum Ablegen von Saatgut und/oder Düngemittel mit einem sich quer zur Fahrtrichtung (F) erstreckenden Rahmen (3,5,18) und mehreren beabstandet zueinander an dem Rahmen (3,5,18) angeordneten, rotierend angetriebenen Dosier- und/oder Ausbringelementen (21,6), wobei jedes Dosier- und/oder Ausbringelement (21,6) eine eigene Antriebseinheit zur Ablage von dosiertem, insbesondere vereinzeltem, Saatgut innerhalb einer Saatreihe aufweist und die Sämaschine (1,1A,1B) zumindest eine Erfassungsvorrichtung zur Erfassung von Messwerten sowie eine Steuereinrichtung umfasst, welche die Antriebseinheit eines jeden Dosier- und/oder Ausbringelements derart ansteuert, dass die Rate des dosierten, insbesondere vereinzelten, abgelegten Saatguts innerhalb einer Saatreihe zumindest annähernd einem konstanten, einstellbaren Wert entspricht, wobei die zumindest eine Erfassungsvorrichtung zur Erfassung von Messwerten als Gierratensensor ausgebildet ist und die Ansteuerung des Antriebs eines jeden Dosier- und/oder Ausbringelements (21,6) auf Basis der gemessenen Gierraten erfolgt, wobei die Steuereinrichtung vorgesehen ist, die Drehzahl eines jeden Dosier- und/oder Ausbringelements (21,6) auf Basis der Steuereinrichtung zugeführter Daten individuell zu steuern **dadurch gekennzeichnet, dass** Abstände der Dosier- und/oder Ausbringelemente von einer zentral in Fahrtrichtung verlaufenden Längsachse der Sämaschine veränderlich sind und Mittel vorgesehen sind, welche der Steuereinrichtung der Sämaschine den tatsächlichen Abstand der Dosier- und/oder Ausbringelemente von der zentral in Fahrtrichtung verlaufenden Längsachse der Sämaschine zuführen und die Steuereinrichtung konfiguriert ist, die Bahngeschwindigkeit eines jeden Dosier- und/oder Ausbringelements (21,6) auf Basis der ermittelten Gierrate zu ermitteln und Steuersignale für die Dosier- und/oder Ausbringelemente (21,6) auf Basis ihrer Bahngeschwindigkeiten und einer Soll-Rate des abzulegenden Saatguts zu generieren.

2. Sämaschine (1,1A,1B) nach Anspruch 1, **dadurch gekennzeichnet, dass** zumindest ein Gierratensensor zentral an der Sämaschine (1,1A,1B) angeordnet ist.

3. Sämaschine (1,1A,1B) nach Anspruch 1, **dadurch gekennzeichnet, dass** die Sämaschine (1,1A,1B) zumindest zwei Gierratensensoren umfasst.

4. Sämaschine (1,1A,1B) nach zumindest einem der vorangegangenen Ansprüche, **dadurch gekennzeichnet, dass** jeweils ein Gierratensensor an den äußeren Enden des Rahmens (3,5,18) angeordnet ist.

5. Verfahren zum Betreiben einer landwirtschaftlichen Sämaschine (1,1A,1B), insbesondere Einzelkornsämaschine (1A), zum Ablegen von Saatgut und/oder Düngemittel mit einem sich quer zur Fahrtrichtung (F) erstreckenden Rahmen (3,5,18) und mehreren beabstandet zueinander an dem Rahmen (3,5,18) angeordneten, rotierend angetriebenen Dosier- und/oder Ausbringelementen (21,6), wobei jedes Dosier- und/oder Ausbringelement (21,6) eine eigene Antriebseinheit zur Ablage von dosiertem, insbesondere vereinzeltem Saatgut innerhalb einer Saatreihe aufweist und die Sämaschine (1,1A,1B) zumindest eine Erfassungsvorrichtung zur Erfassung von Messwerten sowie eine Steuereinrichtung umfasst, welche die Antriebseinheiten eines jeden Dosier- und/oder Ausbringelements derart ansteuert, dass die Rate des dosierten, insbesondere vereinzelten, abgelegten Saatguts innerhalb einer Saatreihe zumindest annähernd einem konstanten, einstellbaren Wert entspricht, wobei die zumindest eine Erfassungsvorrichtung zur Erfassung von Messwerten als Gierratensensor ausgebildet ist und das Verfahren die folgenden Verfahrensschritte umfasst:
• kontinuierliche Erfassung der momentanen Gierrate der Sämaschine (1,1A,1B) während eines Ausbringvorgangs,
• Übermitteln der erfassten Gierraten an die Steuereinrichtung,
• Ermitteln der Bahngeschwindigkeit eines jeden Dosier- und/oder Ausbringelements (21,6) auf Basis der ermittelten Gierrate,
• Generieren von Steuersignalen für die Dosier- und/oder Ausbringelemente (21,6) auf Basis ihrer Bahngeschwindigkeiten und einer Soll-Rate des abzulegenden Saatguts und
• Ansteuern der Antriebseinheiten der Dosier- und/oder Ausbringelemente (21,6) mithilfe der Steuersignale,
wobei vorgesehen ist, die Drehzahl eines jeden Dosier- und/oder Ausbringelements (21,6) auf Basis der Steuereinrichtung zugeführter Daten individuell zu steuern, **dadurch gekennzeichnet, dass**
Abstände der Dosier- und/oder Ausbringelemente von einer zentral in Fahrtrichtung verlaufenden Längsachse der Sämaschine veränderlich sind und Mittel vorgesehen sind, welche der Steuereinrichtung der Sämaschine den tatsächlichen Abstand der Dosier- und/oder Ausbringelemente von der zentral in Fahrtrichtung verlaufenden Längsachse der Sämaschine zuführen.

6. Verfahren nach Anspruch 5, **dadurch gekennzeichnet, dass** für jedes Dosier- und/oder Ausbringelement (21,6) auf Basis der Bahngeschwindigkeiten der Dosier- und/oder Ausbringelemente (21,6) und der Soll-Rate des abzulegenden Saatguts ein zu der Soll-Rate des abzulegenden Saatguts passender Ablagezeitpunkt des abzulegenden Saatguts bestimmt wird.

7. Verfahren nach zumindest einem der vorangegangenen Ansprüche 5 und 6, **dadurch gekennzeichnet, dass** in das Generieren der Steuersignale für jedes Dosier- und/oder Ausbringelement (21,6) die Soll-Rate als ein Grundwert und die ermittelte Gierrate und/oder Bahngeschwindigkeit des jeweiligen Dosier- und/oder Ausbringelements (21,6) als ein Faktor einfließen.

8. Verfahren nach zumindest einem der vorangegangenen Ansprüche 5 bis 7, **dadurch gekennzeichnet, dass** der Steuereinrichtung zusätzlich zur Gierrate weitere Messdaten zugeführt werden.

9. Verfahren nach zumindest einem der vorangegangenen Ansprüche 5 bis 8, **dadurch gekennzeichnet, dass** das in die Generierung des Steuersignals eines Dosier- und/oder Ausbringelements (21,6) die bestimmten Ablagezeitpunkte anderer Dosier- und/oder Ausbringelemente (21,6) einfließen.

10. Verfahren nach zumindest einem der vorangegangenen Ansprüche 5 bis 9, **dadurch gekennzeichnet, dass** eine auf die bestimmten Ablagezeitpunkte des abzulegenden Saatguts abgestimmte Ablage des abzulegenden Düngemittels erfolgt.

## Claims

1. Agricultural seed drill (1,1A,1B), in particular precision seed drill (1A), for depositing seed and/or fertilizer, comprising a frame (3,5,18) extending transversely to the direction of travel (F) and a plurality of rotatingly driven metering and/or spreading elements (21,6) arranged on the frame (3,5,18) at a distance from one another, each metering and/or spreading element (21,6) having its own drive unit for depositing metered, in particular isolated, seed within a seed row, and the seed drill (1,1A,1B) comprising at least one acquisition device for acquiring measured values and a controller which controls the drive unit of each metering and/or spreading element in such a way that the rate of the metered, in particular isolated, deposited seed within a seed row corresponds at least approximately to a constant, adjustable value, the at least one acquisition device for acquiring measured values being designed as a yaw rate sensor and the control of the drive of each metering and/or spreading element (21,6) being carried out on the basis of the measured yaw rates, the controller being provided for individually controlling the speed of each metering and/or spreading element (21,6) on the basis of data supplied to the controller, **characterized in that** distances of the metering and/or spreading elements from a longitudinal axis of the seed drill running centrally in the direction of travel are variable and means are provided which supply the controller of the seed drill with the actual distance of the metering and/or spreading elements from the longitudinal axis of the seed drill running centrally in the direction of travel and the controller is configured to determine the path speed of each metering and/or spreading element (21,6) on the basis of the determined yaw rate and to generate control signals for the metering and/or spreading elements (21,6) on the basis of their path speeds and a target rate of the seed to be deposited.

2. Seed drill (1,1A,1B) according to claim 1, **characterized in that** at least one yaw rate sensor is arranged centrally on the seed drill (1,1A,1B).

3. Seed drill (1,1A,1B) according to claim 1, **characterized in that** the seed drill (1,1A,1B) comprises at least two yaw rate sensors.

4. Seed drill (1,1A,1B) according to at least one of the preceding claims, **characterized in that** a yaw rate sensor is arranged at each of the outer ends of the frame (3,5,18).

5. Method for operating an agricultural seed drill (1,1A,1B), in particular a precision seed drill (1A), for depositing seed and/or fertilizer, comprising a frame (3,5,18) extending transversely to the direction of travel (F) and a plurality of rotatingly driven metering and/or spreading elements (21,6) arranged on the frame (3,5,18) at a distance from one another, each metering and/or spreading element (21,6) having its own drive unit for depositing metered, in particular isolated, seed within a seed row, and the seed drill (1,1A,1B) comprising at least one acquisition device for acquiring measured values and a controller which controls the drive units of each metering and/or spreading element in such a way that the rate of the metered, in particular isolated, deposited seed within a seed row corresponds at least approximately to a constant, adjustable value, the at least one acquisition device for acquiring measured values being designed as a yaw rate sensor and the method comprising the following method steps:
• continuously acquiring the current yaw rate of the seed drill (1,1A,1B) during a spreading process,
• transmitting the acquired yaw rates to the controller,
• determining the path speed of each metering and/or spreading element (21,6) on the basis of the determined yaw rate,
• generating control signals for the metering and/or spreading elements (21,6) on the basis of their path speeds and a target rate of the seed to be deposited and
• controlling the drive units of the metering and/or spreading elements (21,6) using the control signals,
the speed of each metering and/or spreading element (21,6) being individually controlled on the basis of data supplied to the controller, **characterized in that**
distances of the metering and/or spreading elements from a longitudinal axis of the seed drill running centrally in the direction of travel are variable and means are provided which supply the controller of the seed drill with the actual distance of the metering and/or spreading elements from the longitudinal axis of the seed drill running centrally in the direction of travel.

6. Method according to claim 5, **characterized in that** for each metering and/or spreading element (21,6), a deposition time of the seed to be deposited that matches the target rate of the seed to be deposited is determined on the basis of the path speeds of the metering and/or spreading elements (21,6) and the target rate of the seed to be deposited.

7. Method according to at least one of the preceding claims 5 and 6, **characterized in that,** the target rate as a base value and the determined yaw rate and/or path speed of the particular metering and/or spreading element (21,6) as a factor are incorporated into the generation of the control signals for each metering and/or spreading element (21,6).

8. Method according to at least one of the preceding claims 5 to 7, **characterized in that** in addition to the yaw rate, further measurement data is fed to the controller.

9. Method according to at least one of the preceding claims 5 to 8, **characterized in that** the determined deposition times of other metering and/or spreading elements (21,6) are incorporated into the generation of the control signal for a metering and/or spreading element (21,6).

10. Method according to at least one of the preceding claims 5 to 9, **characterized in that** the fertilizer to be deposited is deposited in accordance with the determined deposition times of the seed to be deposited.

## Revendications

1. Semoir (1, 1A, 1B) agricole, en particulier semoir monograine (1A), permettant de déposer des semences et/ou de l'engrais, comportant un châssis (3, 5, 18) s'étendant transversalement au sens de déplacement (F) et plusieurs éléments de dosage et/ou d'épandage (21, 6) disposés à distance les uns des autres sur le châssis (3, 5, 18), entraînés en rotation, dans lequel chaque élément de dosage et/ou d'épandage (21, 6) présente une unité d'entraînement propre permettant de déposer des semences dosées, en particulier individuelles, à l'intérieur d'une ligne de semis, et le semoir (1, 1A, 1B) comprend au moins un dispositif de détection permettant de détecter des valeurs de mesure ainsi qu'un appareil de commande qui commande l'unité d'entraînement de chaque élément de dosage et/ou d'épandage de telle sorte que le débit des semences dosées, en particulier individuelles, déposées à l'intérieur d'une ligne de semis correspond au moins approximativement à une valeur constante et réglable, dans lequel l'au moins un dispositif de détection permettant de détecter des valeurs de mesure est conçu sous la forme d'un capteur de taux de lacet et la commande de l'entraînement de chaque élément de dosage et/ou d'épandage (21, 6) s'effectue sur la base des taux de lacet mesurés, dans lequel l'appareil de commande est prévu pour commander individuellement la vitesse de rotation de chaque élément de dosage et/ou d'épandage (21, 6) sur la base de données fournies à l'appareil de commande, **caractérisé en ce que** des distances des éléments de dosage et/ou d'épandage par rapport à un axe longitudinal du semoir s'étendant de manière centrale dans le sens de déplacement sont variables et des moyens sont prévus, qui fournissent à l'appareil de commande du semoir la distance effective des éléments de dosage et/ou d'épandage par rapport à l'axe longitudinal du semoir s'étendant de manière centrale dans le sens de déplacement, et l'appareil de commande est configuré pour définir la vitesse de trajectoire de chaque élément de dosage et/ou d'épandage (21, 6) sur la base du taux de lacet défini et pour générer des signaux de commande pour les éléments de dosage et/ou d'épandage (21, 6) sur la base de leurs vitesses de trajectoire et d'un taux de consigne des semences à déposer.

2. Semoir (1, 1A, 1B) selon la revendication 1, **caractérisé en ce qu'**au moins un capteur de taux de lacet est disposé de manière centrale sur le semoir (1, 1A, 1B).

3. Semoir (1, 1A, 1B) selon la revendication 1, **caractérisé en ce que** le semoir (1, 1A, 1B) comprend au moins deux capteurs de taux de lacet.

4. Semoir (1, 1A, 1B) selon au moins l'une des revendications précédentes, **caractérisé en ce que** respectivement un capteur de taux de lacet est disposé au niveau des extrémités extérieures du châssis (3, 5, 18).

5. Procédé permettant de faire fonctionner un semoir (1, 1A, 1B) agricole, en particulier un semoir monograine (1A), permettant de déposer des semences et/ou de l'engrais, comportant un châssis (3, 5, 18) s'étendant transversalement au sens de déplacement (F) et plusieurs éléments de dosage et/ou d'épandage (21, 6) entraînés en rotation et disposés à distance les uns des autres sur le châssis (3, 5, 18), dans lequel chaque élément de dosage et/ou d'épandage (21, 6) présente une unité d'entraînement propre pour le dépôt de semences dosées, en particulier individuelles, à l'intérieur d'une ligne de semis et le semoir (1, 1A, 1B) comprend au moins un dispositif de détection permettant de détecter des valeurs de mesure ainsi qu'un appareil de commande qui commande les unités d'entraînement de chaque élément de dosage et/ou d'épandage de telle sorte que le débit des semences dosées, en particulier individuelles, déposées à l'intérieur d'une ligne de semis correspond au moins approximativement à une valeur constante et réglable, dans lequel l'au moins un dispositif de détection permettant de détecter des valeurs de mesure est conçu comme un capteur de taux de lacet et le procédé comprend les étapes de procédé suivantes :
• enregistrement continu du taux de lacet actuel du semoir (1, 1A, 1B) pendant un processus d'épandage,
• transmission des taux de lacet détectés à l'appareil de commande,
• définition de la vitesse de trajectoire de chaque élément de dosage et/ou d'épandage (21, 6) sur la base du taux de lacet défini,
• génération de signaux de commande pour les éléments de dosage et/ou d'épandage (21, 6) sur la base de leurs vitesses de trajectoire et d'un débit de consigne des semences à déposer et
• commande des unités d'entraînement des éléments de dosage et/ou d'épandage (21,6) à l'aide des signaux de commande,
dans lequel il est prévu de commander individuellement la vitesse de rotation de chaque élément de dosage et/ou d'épandage (21, 6) sur la base de données fournies à l'appareil de commande, **caractérisé en ce que**
des distances des éléments de dosage et/ou d'épandage par rapport à un axe longitudinal du semoir s'étendant de manière centrale dans le sens de déplacement sont variables et des moyens sont prévus, lesquels transmettent à l'appareil de commande du semoir la distance effective des éléments de dosage et/ou d'épandage par rapport à l'axe longitudinal du semoir s'étendant de manière centrale dans le sens de déplacement.

6. Procédé selon la revendication 5, **caractérisé en ce que,** pour chaque élément de dosage et/ou d'épandage (21, 6), on détermine, sur la base des vitesses de trajectoire des éléments de dosage et/ou d'épandage (21, 6) et du débit de consigne des semences à déposer, un moment de dépôt des semences à déposer qui est adapté au débit de consigne des semences à déposer.

7. Procédé selon au moins l'une des revendications précédentes 5 et 6, **caractérisé en ce que,** dans la génération des signaux de commande pour chaque élément de dosage et/ou d'épandage (21, 6), le débit de consigne est intégré en tant que valeur de base et le taux de lacet et/ou la vitesse de trajectoire définis de l'élément de dosage et/ou d'épandage (21, 6) respectif sont intégrés en tant que facteur.

8. Procédé selon au moins l'une des revendications précédentes 5 à 7, **caractérisé en ce que** d'autres données de mesure sont fournies à l'appareil de commande en plus du taux de lacet.

9. Procédé selon au moins l'une des revendications précédentes 5 à 8, **caractérisé en ce que,** dans la génération du signal de commande d'un élément de dosage et/ou d'épandage (21, 6), les moments de dépôt déterminés d'autres éléments de dosage et/ou d'épandage (21, 6) sont intégrés.

10. Procédé selon au moins l'une des revendications précédentes 5 à 9, **caractérisé en ce que** l'on réalise un dépôt de l'engrais à déposer adapté aux moments de dépôt déterminés des semences à déposer.
